# EUROPÄISCHE PATENTSCHRIFT

(11) **EP 2 027 459 B1**
(45) Veröffentlichungstag und Bekanntmachung des Hinweises auf die Patenterteilung: **26.12.2012**
(21) Anmeldenummer: 08734954.4
(22) Anmeldetag: 02.04.2008
(51) Int. Cl.: G01N 27/22

(54) **FEUCHTESENSOR UND VERFAHREN ZUM MESSEN DER FEUCHTE EINES GASFÖRMIGEN MEDIUMS**
MOISTURE SENSOR AND METHOD FOR MEASURING MOISTURE OF A GAS-PHASE MEDIUM
DÉTECTEUR D'HUMIDITÉ ET PROCÉDÉ DE MESURE DE L'HUMIDITÉ D'UN MILIEU GAZEUX

(30) Priorität: 05.04.2007 EP 07007171
(43) Veröffentlichungstag der Anmeldung: 25.02.2009
(73) Patentinhaber: Micronas GmbH, 79108 Freiburg i. Br. (DE)
(72) Erfinder: LEHMANN, Mirko, CH-9642 Ebnat-Kappel (CH); FRERICHS, Heinz-Peter, 79271 St. Peter (DE); FREUND, Ingo, 79117 Freiburg (DE)
(74) Vertreter: Koch, Bertram
(86) Internationale Anmeldenummer: PCT/EP2008/002606
(87) Internationale Veröffentlichungsnummer: WO 2008/122390

(56) Entgegenhaltungen:
- EP-A- 1 176 418
- EP-A- 1 489 408
- WO-A-03/076921
- BURGMAIR M ET AL: "Contribution of the gate insulator surface to work function measurements with a gas sensitive FET" PROCEEDINGS OF IEEE SENSORS 2002. ORLANDO, FL, JUNE 12 - 14, 2002, IEEE INTERNATIONAL CONFERENCE ON SENSORS, NEW YORK, NY : IEEE, US, Bd. VOL. 1 OF 2. CONF. 1, 12. Juni 2002 (2002-06-12), Seiten 439-442, XP010605133 ISBN: 0-7803-7454-1
- BURGMAIR M ET AL: "Field effect transducers for work function gas measurements: device improvements and comparison of performance" SENSORS AND ACTUATORS B, ELSEVIER SEQUOIA S.A., LAUSANNE, CH, Bd. 95, Nr. 1-3, 15. Oktober 2003 (2003-10-15), Seiten 183-188, XP004454668 ISSN: 0925-4005

## Beschreibung

Die Erfindung betrifft einen Feuchtesensor, der an seiner Oberfläche einen Aufnahmebereich für einen Feuchtefilm aufweist, dessen Schichtdicke von der relativen Feuchte in der Umgebung des Aufnahmebereichs abhängig ist, wobei der Feuchtesensor eine Signalquelle hat, die zum Anlegen einer Steuerspannung an den Feuchtefilm mit mindestens einer, an wenigstens einer Einspeisestelle an den Aufnahmebereich angrenzenden Steuerelektrode verbunden. Ferner betrifft die Erfindung ein Verfahren zum Messen der Feuchte eines gasförmigen Mediums, wobei auf einem Festkörper ein Feuchtefilm erzeugt wird, dessen Schichtdicke von der relativen Feuchte im Medium abhängig ist, und wobei an mindestens einer Einspeisestelle ein elektrisches Potential an den Feuchtefilm angelegt wird.

Eine derartiger Feuchtesensor ist aus P. Ruther et al.: "Surface Conductivity of CMOS Silicon Nitride Layers", Proceedings of IEEE Sensor 2003, Toronto, 22.-24. Oktober 2003, Seiten 920-925 bekannt. Der Feuchtesensor weist an der Oberfläche einer Nitridschicht mehrere konzentrisch zueinander angeordnete Ringelektroden auf, die jeweils durch Zwischenräume voneinander beabstandet sind. Mit Hilfe der Ringelektroden wird die von der Feuchte in der Atmosphäre abhängige Oberflächenleitfähigkeit der Nitridschicht untersucht. Dazu wird mittels einer Signalquelle eine zeitlich veränderliche Steuerspannung an die Ringelektroden angelegt. Die Steuerspannung verursacht an der Oberfläche der Nitridschicht einen Stromfluss, der in Abhängigkeit von der Umgebungstemperatur und der relativen Feuchte gemessen und in Form eines Kennfelds aufgezeichnet wird. Mit Hilfe des Stroms wird die Oberflächenleitfähigkeit der Nitridschicht bestimmt. Mit Hilfe des Kennfelds kann außerdem aus dem elektrischen Strom die relative Feuchte ermittelt werden. Der Feuchtesensor hat jedoch den Nachteil, dass Verschmutzungen zwischen den Ringelektroden den elektrischen Widerstand an der Oberfläche der Nitridschichten drastisch verändern und damit dass Feuchte-Messsignal erheblich verfälschen können.

Aus DE 39 11 812 C2 ist ein Feuchtesensor bekannt, der eine feuchtesensitive, aus Polytetrafluorethylen bestehende Schicht aufweist, die sich zwischen zwei Elektroden befindet, nämlich einer feuchtedurchlässigen Deckelektrode und einer Grundelektrode. Der Feuchtesensor wird zur kapazitiven Messung der Feuchte verwendet. Dabei wird der Effekt ausgenutzt, dass Wassermoleküle in mikroskopischen Hohlräumen des amorphen Polytetrafluorethylen adsorbiert werden und die Kapazität zwischen den Elektroden feuchteabhängig verändern.

Aus DE 39 11 812 C2 ist auch ein nach dem resistiven Messprinzip arbeitender Feuchtesensor bekannt, bei dem die zwischen den Elektroden befindliche Polytetrafiuorethylen-Schicht elektrisch leitfähig ist. Die Elektroden sind interdigitale Kammelektroden, bei denen in der Aufsicht auf den Feuchtesensor die Finger der einen Elektrode in den zwischen den Fingern der anderen Elektrode gebildeten Zwischenräumen angeordnet sind. Die Elektroden sind mit einer Spannungsquelle verbunden, die einen Stromfluss ein dem Feuchtesensor verursacht, der von der einen Elektrode über das Polytetrafluorethylen zu der anderen Elektrode fließt und mit Hilfe eines Sensors gemessen wird.

Auch bei den aus DE 39 11 812 C2 bekannten Feuchtesensor besteht das Problem, dass Verschmutzungen an den Elektroden das Feuchte-Messsignal verfälschen können.

Aus EP 1 489 408 A1 ist ferner ein Sensor zum Bestimmen von CO₂ in einem zugeführten Gas bekannt. Der Sensor hat an seiner Oberfläche eine poröse Sensorschicht, an der bei einem Kontakt mit dem CO₂ eine Änderung der Austrittsarbeit auftritt. Unterhalb der Sensorschicht ist ein Halbleiersubstrat angeordnet, in das als Potentialsensor ein ISFET integriert ist. Bei einer Änderung der Austrittsarbeit der Sensorschicht verändert sich die Spannung zwischen Gate und Source sowie zwischen Drain und Source des ISFET. Die Spannung zwischen Drain und Source dient als Ausgangssignal für den Sensor.

Die Oberfläche der Sensorschicht ist mit einem Feuchtefilm belegt. Während die Sensorschicht im Wesentlichen langzeitstabil gegenüber Umgebungsluft ist, kann sich im Langzeitbetrieb der pH-Wert des Feuchtefilms durch die Einwirkung von Umgebungsgasen verändern. Um einer solche pH-Wertänderung zu kompensieren, weist der Sensor benachbart zu seiner Oberfläche eine Steuerelektrode und einen Guardring auf, die elektrischen Ausgangsanschlüssen einer Signalquelle verbunden sind. Mit Hilfe der Signalquelle wird eine elektrische Spannung zwischen die Steuerelektrode und den Guardring angelegt, die im Feuchtefilm einen positiven bzw. negativen Stromfluss bewirkt, der das Wasser des Feuchtefilms oxidiert bzw. reduziert. Dabei entstehen H⁺ bzw. OH⁻-Ionen, die einen Abfall oder Anstieg des pH-Wertes im Feuchtefilm bewirken. Eine Messung der Feuchte des Gases ist bei diesem Sensor nicht vorgesehen.

Es besteht somit die Aufgabe, einen Feuchtesensor und ein Verfahren der eingangs genannten Art zu schaffen, die es ermöglichen, die Feuchte weitestgehend unabhängig von in der Umgebung der Messstelle auftretenden Verschmutzungen zu messen.

Diese Aufgabe wird bezüglich des Feuchtesensors mit den Merkmalen des Anspruchs 1 und bezüglich des Verfahrens mit den Merkmalen des Anspruchs 10 gelöst.

In vorteilhafter Weise wird also zur Bestimmung der Feuchte ein elektrisches Potential an dem Feuchtefilm gemessen. Das Messsignal ist dadurch weitgehend unabhängig von an der Steuerelektrode eventuell vorhandenen Verschmutzungen. Die Dicke des Feuchtefilms ist ein Maß für die relative Feuchte in der Umgebung, vergleiche Michelle L Gee et al., "Hydrophobicity Effects in the Condensation of Water Films on Quartz", Journal of Colloid and Interface Science, Band 140, Nr. 2, Seiten 450-464 (Dezember 1990). Das Potential an dem Feuchtefilm kann statisch und/oder dynamisch gemessen werden. Aufgrund der bei der dynamischen Messung auftretenden Ladungsverschiebungen ist das Messsignal trotz der zwischen dem Aufnahmebereich und dem Potentialsensor befindlichen Isolationsschicht vom ohmschen Widerstand des Feuchtefilms und somit von dessen Dicke abhängig. Der Innenwiderstand der Signalquelle ist bevorzugt wesentlich kleiner als der elektrische Widerstand der während des Gebrauchs des Feuchtesensors an der Steuerelektrode zu erwartenden Verschmutzungen, so dass die über die Steuerelektrode an den Feuchtefilm angelegte Steuerspannung weitestgehend unabhängig von der Verschmutzung und einem über diese abfließenden elektrischen Strom ist.

Mit abnehmender Feuchte nimmt aufgrund der dann reduzierten Schichtdicke und aufgrund des größeren elektrischen Widerstands des Feuchtefilms bei gleichem zeitlichem Verlauf des Steuersignals die Änderungsgeschwindigkeit des Messsignals ab. In entsprechender Weise nimmt bei zunehmender Feuchte die Änderungsgeschwindigkeit zu. Die Änderungsgeschwindigkeit ist also ein Maß für die relative Feuchte. Die Auswertung der Änderungsgeschwindigkeit kann mit Hilfe einer Analogschaltung (z.B. einem Differenzierglied) und/oder mit Methoden der digitalen Signalverarbeitung erfolgen. Die Auswerteeinrichtung kann zu diesem Zweck einen Mikrocomputer aufweisen.

Eine Änderung der Feuchte in der Umgebung des Feuchtesensors hat eine Veränderung der Kennlinie des ionensensitiver Feldeffekttransistors (ISFET) zu Folge, die bewirkt, dass bei einer Zunahme der relativen Feuchte der Gleichanteil des Messsignals betragsmäßig zunimmt und bei einer Abnahme der Feuchte betragsmäßig abnimmt. Dies resultiert aus Änderungen der Ladungsdichte an der Kontaktfläche zwischen dem Feuchtefilm und der Isolationsschicht. Diese Änderung der Ladungsdichte wirkt wie ein zusätzliches Potential auf den ISFET-Kanalbereich bzw. den Eingang des Messverstärkers, welches das Messsignal in Richtung betragsmäßig größerer Potentialwerte verschiebt. Die relative Feuchte kann also auch anhand der Potentialverschiebung des Messsignals statisch ermittelt werden. Diese kann beispielsweise mittels einer Vergleichseinrichtung, einer Addier- oder Subtrahiereinrichtung bestimmt werden.

Vorteilhaft ist, wenn die Steuerelektrode mindestens zwei, durch wenigstens eine Leiterbahn miteinander verbundene Elektrodenbereiche aufweist, und wenn der Aufnahmebereich zwischen diesen Elektrodenbereichen angeordnet ist. Das Messsignal des Potentialsensors ist dann noch unabhängiger gegenüber Verschmutzungen an der Steuerelektrode. Nicht einmal ein Kurzschluss zwischen den Elektrodenbereichen würde eine Veränderung des Messsignals bewirken.

Bei einer bevorzugten Ausgestaltung der Erfindung verläuft die Steuerelektrode unterbrechungsfrei um den Aufnahmebereich herum und ist insbesondere als Ringelektrode ausgestaltet. Dabei steht die Ringelektrode vorzugsweise an ihrem gesamten Innenumfang mit Feuchtefilm in Kontakt, so dass dieser von allen Seiten mit der Steuerspannung beaufschlagt wird.

Bei einer vorteilhaften Ausführungsform der Erfindung ist der Potentialsensor ein Feldeffekttransistor, insbesondere ein ISFET ist, der ein Halbleitersubstrat eines ersten Ladungsträgertyps aufweist, auf dem eine Drain und eine Source eines zweiten Ladungsträgertyps angeordnet sind, wobei zwischen Drain und Source ein Kanalbereich gebildet ist, der den Sensorbereich bildet. Der Feldeffekttransistor bildet dann über die Isolationsschicht mit dem Feuchtefilm eine elektrische Kapazität, die mit dem ohmschen Widerstand des Feuchtefilms und der Signalquelle in Reihe geschaltet ist und an der beim Einspeisen der zeitlich veränderlichen Steuerspannung in die Steuerelektrode ein Spannungsabfall auftritt, der die Leitfähigkeit im Kanalbereich des Feldeffekttransistors verändert. Mit Hilfe des Feldeffekttransistors kann das Potential des Feuchtefilms hochohmig gemessen werden. Der Feldeffekttransistor ist bevorzugt direkt unterhalb des Feuchtefilms bzw. des Aufhahmebereichs für den Feuchtefilm angeordnet und ermöglicht dadurch eine gegen EMV-Einwirkung weitgehend unempfindliche Messsignalgewinnung sowie kompakte Abmessungen des Feuchtesensors.

Bei einer anderen Ausgestaltung der Erfindung ist der Sensorbereich durch eine vorzugsweise flächige Messelektrode gebildet, die über eine Leiterbahn mit dem Kanalbereich eines Feldeffekttransistors und/oder einem Eingang eines hochohmigen Messverstärkers verbunden ist. Der Kanalbereich bzw. der Messverstärker kann also auch seitlich von dem Sensorbereich beabstandet sein.

Vorteilhaft ist, wenn der lichte Abstand zwischen zwei beidseits des Aufhahmebereichs angeordneten Elektrodenbereichen oder die lichte Weite der Ringelektrode kleiner als 1 00 µm ist, insbesondere kleiner als 1 0 µm und bevorzugt kleiner als 1 µm. Diese Abmessung ermöglicht für die meisten Anwendungen eine ausreichend schnelle Reaktion des Messsignals auf eine Feuchteänderung. Bei einer lichten Weite der Ringelektrode von etwa 1 µm beträgt die Zeitdauer, die der Feuchtesensor benötigt, um eine sprungartige Änderung der relativen Feuchte von 5% auf 95% zu detektieren, etwa zwischen 0,1 und 2 Sekunden.

Bei einer zweckmäßigen Ausgestaltung der Erfindung ist die Signalquelle derart ausgestaltet, dass sie eine Steuerspannung mit mindestens einer Sprungstelle, insbesondere ein Rechtecksignal erzeugen kann. Aufgrund der hohen Signaländerungsgeschwindigkeit an der Sprungstelle ergibt sich eine schnelle Änderung des Messsignals als Reaktion auf die Sprungstelle. Durch die Sprungstelle des Messsignals können außerdem die Änderungsgeschwindigkeit und die Potentialverschiebung des Messsignals als Reaktion auf eine Feuchteänderung leicht ermittelt werden.

Die Isolationsschicht umfasst bevorzugte eine Siliziumdioxid-Schicht und/oder eine Silizium-Nitrid-Schicht. Diese Schichten ermöglichen einen hohen spezifischen elektrischen Widerstand und lassen sich gut mit Hilfe von Standard-Prozessen der Halbleiterfertigung herstellen.

Vorteilhaft ist, wenn die Signalquelle, die Steuerelektrode, der Potentialsensor, die Isolationsschicht und die Auswerteeinrichtung in einen Halbleiterchip integriert sind. Der Feuchtesensor kann dann mit Methoden der Halbleiterfertigung kostengünstig in großer Stückzahl hergestellt werden und ermöglicht außerdem kompakte Abmessungen. Der Halbleiterchip kann mit einer elektrisch isolierenden Vergussmasse ummantelt sein, die eine Öffnung hat, welche einen Zugang zu dem Aufnahmebereich bildet.

Weitere vorteilhafte Ausgestaltungen der Erfindung sind in den Unteransprüchen beschrieben.

Nachfolgend ist ein Ausführungsbeispiel der Erfindung anhand der Zeichnung näher erläutert. Es zeigt
- Fig. 1: einen Teilquerschnitt durch einen Feuchtesensor, der eine Steuerelektrode zum Anlegen einer Steuerspannung an einen Feuchtefilm aufweist,
- Fig. 2: eine Aufsicht auf einen Teilbereich eines Halbleiterchips des Feuchtesensors, bei der die Steuerelektrode und ein darunter befindlicher ISFET erkennbar sind, und

- Fig. 3: eine graphische Darstellung von zwei bei unterschiedlicher relativer Feuchte aufgezeichneten Messsignalen eines Potentialsensors des Feuchtesensor und einer an den Feuchtefilm angelegten Steuerspannung, wobei auf der Abszisse die Zeit t und auf der Ordinate die Messsignal-Amplitude s dargestellt sind.

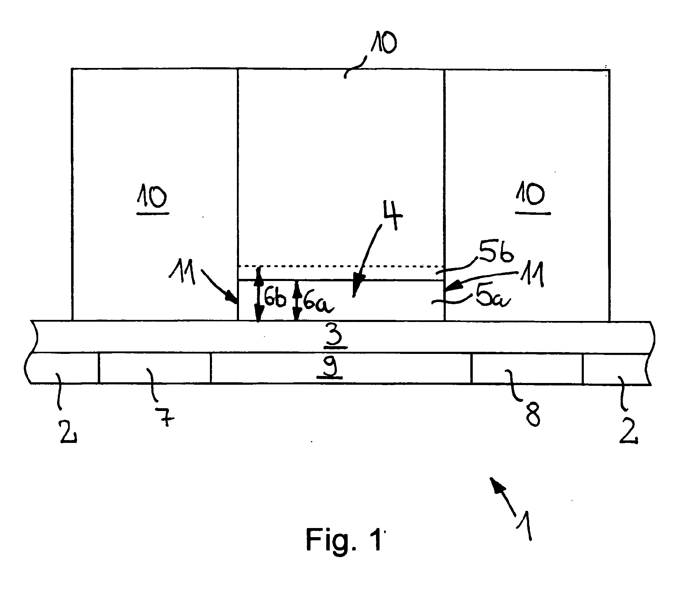

Ein in Fig. 1 im Ganzen mit 1 bezeichneter Feuchtesensor hat ein Halbleitersubstrat 2, an dessen Oberfläche eine elektrische Isolationsschicht 3 angeordnet ist, vorzugsweise eine Siliziumdioxid-Schicht oder eine Silizium-Nitrid-Schicht. In das Halbleitersubstrat 2 ist eine Dotierung eines ersten Ladungsträgertyps eingebracht.

Auf der Isolationsschicht 3 ist ein Aufnahmebereich 4 für einen Feuchtefilm 5a, 5b vorgesehen. Der Feuchtesensor 1 ist mit einer in der Zeichnung nicht näher dargestellten elektrisch isolierenden Vergussmasse umspritzt, die eine Öffnung hat, welche einen Zugang zu dem Aufnahmebereich bildet. Die Schichtdicke 6a, 6b des Feuchtefilms 5a, 5b und damit der ohmsche Widerstand des Feuchtefilms 5a, 5b sind von der relativen Feuchte der mit dem Aufnahmebereich 4 in Kontakt befindlichen Atmosphäre abhängig. In Fig. 1 ist dies durch eine strichlinierte Linie angedeutet.

In das Halbleitersubstrat 2 ist ein Potentialsensor integriert, der unterhalb des Aufnahmebereichs einen Sensorbereich 9 zum Detektieren von in dem Aufnahmebereich befindlichen elektrischen Ladungen aufweist. Der Potentialsensor ist als ISFET ausgestaltet und weist eine Drain 7 und eine Source 8 eines zweiten Ladungsträgertyps auf. Zwischen Drain 7 und Source 8 ist ein Kanalbereich angeordnet, der den Sensorbereich 9 bildet. Der Kanalbereich ist durch die Isolationsschicht 3 von dem Aufnahmebereich 4 bzw. dem darin befindlichen Feuchtefilm 5a, 5b beabstandet.

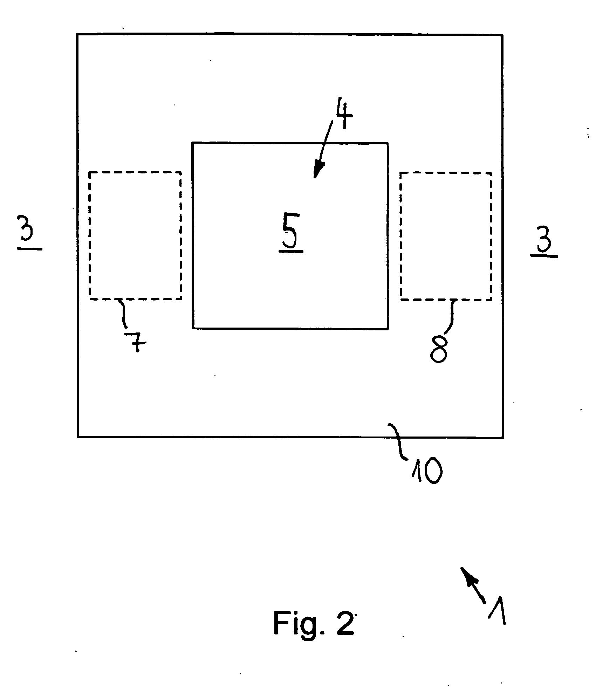

An seiner dem Kanalbereich abgewandten Oberfläche hat der Feuchtesensor 1 eine Steuerelektrode 10, die mit dem als Einspeisestelle 11 für eine Steuerspannung dienenden Außenrand des Feuchtefilms in Kontakt steht. Die Einspeisestelle 11 ist über dem Rand des Kanalbereichs angeordnet oder seitlich von diesem beabstandet. In Fig. 2 ist erkennbar, dass die Steuerelektrode 10 als Ringelektrode ausgestaltet ist und den Aufnahmebereich 4 für den Feuchtefilm 5a, 5b umgrenzt. Teilbereiche der Steuerelektrode 10 sind über der Source 8 und der Drain 7 angeordnet. Die Steuerelektrode 10 ist durch die Isolationsschicht 3 elektrisch gegen Source 8 und der Drain 7 isoliert.

Die Steuerelektrode 10 ist über eine Leiterbahn mit einem ersten Ausgangsanschluss einer in der Zeichnung nicht näher dargestellten Signalquelle elektrisch verbunden. Ein zweiter Ausgangsanschluss der Signalquelle ist am Halbleitersubstrat 2 angeschlossen. Die Signalquelle ist bevorzugt in das Halbleitersubstrat 2 integriert.

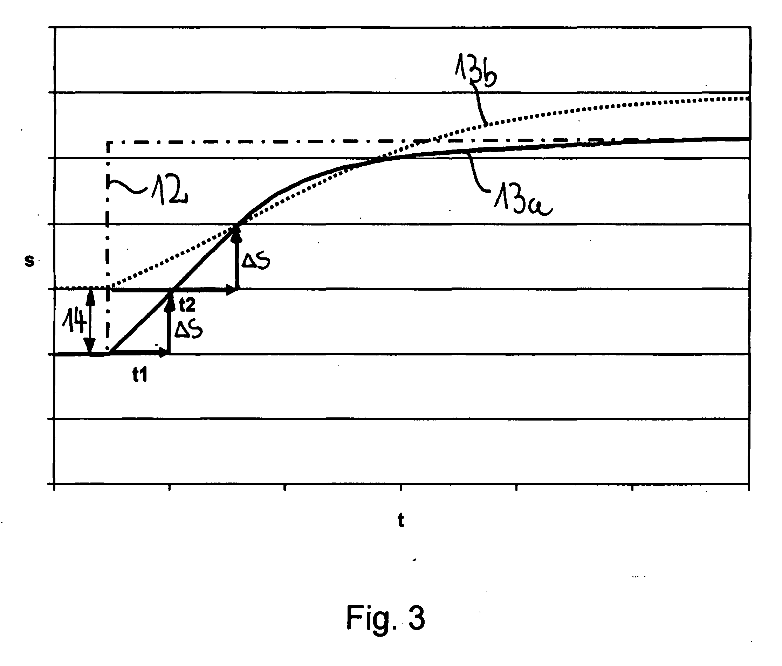

Mit Hilfe der Signalquelle wird eine zeitlich veränderliche Steuerspannung, nämlich ein eine vorbestimmte Frequenz und eine vorbestimmte Amplitude aufweisendes Rechtecksignal erzeugt und über die Steuerelektrode 10 an den Feuchtefilm 5a, 5b angelegt. Der zeitliche Verlauf 12 der Steuerspannung ist in Fig. 3 graphisch dargestellt. Der Feuchtefilm 5a, 5b bildet mit dem ISFET eine elektrische Kapazität, die mit dem ohmschen Widerstand und der Steuerelektrode in Reihe geschaltet ist.

Während die Steuerspannung an dem Feuchtefilm 3 anliegt, wird das elektrische Potential in dem Aufnahmebereich 4 mit Hilfe des ISFET kapazitiv detektiert. Das Messsignal 13a, 13b des ISFET ist vom zeitlichen Verlauf 12 der Steuerspannung und von der Schichtdicke 6a, 6b des Feuchtefilms 5a, 5b abhängig. Die Schichtdicke 6a, 6b kann kleiner als 500 nm sein und ist bevorzugt kleiner als 100 nm.

In Fig. 3 ist erkennbar, dass bei gleich bleibendem Verlauf 12 der Steuerspannung die Geschwindigkeit, mit der sich das Messsignal 13a, 13b als Reaktion auf eine Änderung der Steuerspannung verändert, mit abnehmender Dicke des Feuchtefilms abnimmt. Der Wert dieser Änderungsgeschwindigkeit kann beispielsweise dadurch bestimmt werden, dass die Zeit t₁ bzw. t₂, die das Messsignal 13a, 13b benötigt, um beim Auftreten einer Sprungstelle in der Steuerspannung seinen Wert um einen vorbestimmten Betrag Δs zu verändern gemessen und die Änderungsgeschwindigkeit durch Bildung des Quotienten Δs / t₁ bzw. Δs / t₂ berechnet wird.

In Fig. 3 ist außerdem erkennbar, dass sich das Messsignal 13a, 13b bei gleich bleibendem Verlauf 12 der Steuerspannung um einen Offset 14 verschiebt, wenn sich die Schichtdicke 6a, 6b des Feuchtefilms 5a, 5b und somit die relative Feuchte verändert. Bei einer Zunahme der Schichtdicke 6a, 6b nimmt der Betrag des Messsignal 13a, 13b zu und bei einer Abnahme der Schichtdicke nimmt das der Betrag des Messsignals 13a, 13b ab.

Für die Änderungsgeschwindigkeit und den Offset 14 werden in Abhängigkeit von der relativen Feuchte Referenzwerte bereitgestellt, beispielsweise in Form von Kennlinien oder in Form eines Kennfelds, für das Stützstellen gespeichert sind. Die Referenzwerte werden bevorzugt durch Messung ermittelt, können aber auch berechnet werden, vergleiche Michelle L Gee et al., "Hydrophobicity Effects in the Condensation of Water Films on Quartz", Journal of Colloid and Interface Science, Band 140, Nr. 2, Seiten 450-464 (Dezember 1990).

Anhand des Potential-Sensormesssignals 13a, 13b und der Referenzwerte kann dann die relative Feuchte bestimmt werden, um beispielsweise ein zu der relativen Feuchte proportionales Analogsignal und/oder ein entsprechendes digitales Signal zu erzeugen. Ein Messsignalausgang des Potentialsensors ist dazu mit einer entsprechenden Auswerteeinrichtung verbunden ist. Diese hat eine elektrische Schaltung zum Erzeugen eines Signals für die Änderungsgeschwindigkeit und eines Signals für den Offset 14 des Messsignals 13a, 13b.

## Patentansprüche

1. Feuchtesensor (1), der an seiner Oberfläche einen Aufnahmebereich (4) für einen Feuchtefilm (5a, 5b) aufweist, dessen Schichtdicke (6a, 6b) von der relativen Feuchte in der Umgebung des Aufnahmebereichs (4) abhängig ist, wobei der Feuchtesensor (1) eine Signalquelle hat, die Mittel zum Erzeugen einer Steuerspannung aufweist, wobei die Signalquelle zum Anlegen der Steuerspannung an den Feuchtefilms (5a, 5b) mit mindestens einer, an wenigstens einer Einspeisestelle (11) an den Aufnahmebereich (4) angrenzenden Steuerelektrode (10) verbunden ist, wobei der Feuchtesensor (1) mindestens einen Potentialsensor aufweist der unter dem Aufnahmebereich (4) wenigstens einen, von der wenigstens einen Einspeisestelle (11) beabstandeten Sensorbereich (9) hat, der derart durch eine zwischen diesem und dem Aufnahmebereich (4) befindliche Isolationsschicht (3) gegen den Aufnahmebereich (4) elektrisch isoliert ist, dass mittels des Potentialsensors ein von der Schichtdicke des Feuchtefilms (5a, 5b) und der Steuerspannung abhängiges elektrisches Potential kapazitiv detektierbar ist, wobei mit dem Messsignalausgang des Potentialsensors eine Auswerteeinrichtung zum Ermitteln der Feuchte aufgrund des an dem Messsignalausgang anlegenden Messsignals verbunden ist,
- wobei die Signalquelle Mittel zum Erzeugen einer veränderlichen Steuerspannung aufweist und die Auswerteeinrichtung Mittel zum Erzeugen eines von der Geschwindigkeit, mit der sich das Potentialsensor-Messsignal als Reaktion auf die Änderung der Steuerspannung verändert, abhängigen Signals aufweist, und/oder
- wobei die Auswerteeinrichtung Mittel zum Erzeugen eines Signals für eine Potentialverschiebung zwischen dem Messsignal des Potentialsensors und einem Referenzsignal oder einem Referenzpotential aufweist.

2. Feuchtesensor (1) nach Anspruch 1, **dadurch gekennzeichnet, dass** die Steuerelektrode (10) mindestens zwei, durch wenigstens eine Leiterbahn miteinander verbundene Elektrodenbereiche aufweist, und dass der Aufnahmebereich zwischen diesen Elektrodenbereichen angeordnet sind.

3. Feuchtesensor (1) Anspruch 1 oder 2, **dadurch gekennzeichnet, dass** die Steuerelektrode (10) vorzugsweise unterbrechungsfrei um den Aufhahmebereich (4) herumläuft und insbesondere als Ringelektrode ausgestaltet ist.

4. Feuchtesensor (1) nach einem der Ansprüche 1 bis 3, **dadurch gekennzeichnet, dass** der Potentialsensor ein Feldeffekttransistor, insbesondere ein ionensensitiver Feldeffekttransistor ist, der ein Halbleitersubstrat (2) eines ersten Ladungsträgertyps aufweist, auf dem eine Drain (7) und eine Source (8) eines zweiten Ladungsträgertyps angeordnet sind, und dass zwischen Drain (7) und Source (8) ein Kanalbereich gebildet ist, der den Sensorbereich (9) bildet.

5. Feuchtesensor (1) nach einem der Ansprüche 1 bis 4, **dadurch gekennzeichnet, dass** der Sensorbereich (9) durch eine vorzugsweise flächige Messelektrode gebildet ist, die über eine Leiterbahn mit dem Kanalbereich eines Feldeffekttransistors und/oder einem Eingang eines hochohmigen Messverstärkers verbunden ist.

6. Feuchtesensor (1) nach einem der Ansprüche 1 bis 5, **dadurch gekennzeichnet, dass** der lichte Abstand zwischen zwei beidseits des Aufhahmebereichs angeordneten Elektrodenbereichen oder die lichte Weite der Ringelektrode kleiner als 100 µm ist, insbesondere kleiner als 10 µm und bevorzugt kleiner als 1 µm.

7. Feuchtesensor (1) nach einem der Ansprüche 1 bis 6, **dadurch gekennzeichnet, dass** die Signalquelle derart ausgestaltet ist, dass sie eine Steuerspannung mit mindestens einer Sprungstelle, insbesondere ein Rechtecksignal erzeugen kann.

8. Feuchtesensor (1) nach einem der Ansprüche 1 bis 7, **dadurch gekennzeichnet, dass** die Isolationsschicht (3) eine Siliziumdioxid-Schicht und/oder eine Silizium-Nitrid-Schicht umfasst.

9. Feuchtesensor (1) nach einem der Ansprüche 1 bis 8, **dadurch gekennzeichnet, dass** die Signalquelle, die Steuerelektrode (10), der Potentialsensor, die Isolationsschicht (3) und die Auswerteeinrichtung in einen Halbleiterchip integriert sind.

10. Verfahren (1) zum Messen der Feuchte eines gasförmigen Mediums, wobei auf einem Festkörper ein Feuchtefilm erzeugt wird, dessen Schichtdicke von der relativen Feuchte im Medium abhängig ist, und wobei an mindestens einer Einspeisestelle (11) eine elektrische Steuerspannung an den Feuchtefilm angelegt wird, wobei an einer von der mindestens einen Einspeisestelle (11) beabstandeten Stelle ein Messsignal für ein von der Schichtdicke (6a, 6b) des Feuchtefilms (5a, 5b) und der Steuerspannung abhängiges elektrisches Potential durch eine elektrische Isolationsschicht (3) hindurch kapazitiv gemessen wird,
- wobei die Steuerspannung zeitlich verändert wird und die Geschwindigkeit, mit der sich das elektrische Potential als Reaktion auf eine Änderung der Steuerspannung verändert, bestimmt wird, und/oder
- wobei eine Potentialverschiebung zwischen dem gemessenen elektrischen Potential und einem Referenzpotential bestimmt wird.

## Claims

1. Moisture sensor (1) which has at its surface a receiving region (4) for a moisture film (5a, 5b), the layer thickness (6a, 6b) of which is dependent on the relative moisture in the environment of the receiving region (4), wherein the moisture sensor (1) has a signal source which comprises means for generating a control voltage, wherein the signal source is for application of the control voltage to the moisture film (5a, 5b) connected with at least one control electrode (10) adjoining a feed point (11) at the receiving region (4), wherein the moisture sensor (1) comprises at least one potential sensor which has under the receiving region (4) at least one sensor region (9), which is spaced from the at least one feed point (11) and which is so electrically insulated relative to the receiving region (4) by an insulation layer (3) disposed between the sensor region and the receiving region (4) that an electrical potential dependent on the layer thickness of the moisture film (5a, 5b) and the control voltage is capacitively detectable by means of the potential sensor, wherein an evaluating device is connected with the measurement signal output of the potential sensor for determining the moisture on the basis of the measurement signal present at the measurement signal output,
- wherein the signal source comprises means for generating a variable control voltage and the evaluating device comprises means for generating a signal dependent on the speed at which the potential sensor measurement signal changes as a reaction to the change of the control voltage, and/or
- wherein the evaluating device comprises means for generating a signal for a potential displacement between the measurement signal of the potential sensor and a reference signal or a reference potential.

2. Moisture sensor (1) according to claim 1, **characterised in that** the control electrode (10) has at least two electrode regions connected together by at least one conductor track and that the receiving region is arranged between these electrode regions.

3. Moisture sensor (1) according to claim 1 or 2, **characterised in that** the control electrode (10) runs preferably free of interruption around the receiving region (4) and, in particular, is designed as a ring electrode.

4. Moisture sensor (1) according to any one of claims 1 to 3, **characterised in that** the potential sensor is a field effect transistor, particularly an ion-sensitive field effect transistor, which comprises a semiconductor substrate (2) of a first charge carrier type on which a drain (7) and a source (8) of a second charge carrier type are arranged and that a channel region which forms the sensor region (9) is formed between drain (7) and source (8).

5. Moisture sensor (1) according to any one of claims 1 to 4, **characterised in that** the sensor region (9) is formed by a preferably flat measuring electrode which is connected by way of a conductor track with the channel region of a field effect transistor and/or an input of a high impedance measuring amplifier.

6. Moisture sensor (1) according to any one of claims 1 to 5, **characterised in that** the clear spacing between two electrode regions arranged on either side of the receiving region or the clear width of the ring electrode is less than 100 microns, particularly less than 10 microns and preferably less than 1 micron.

7. Moisture sensor (1) according to any one of claims 1 to 6, **characterised in that** the signal source is so equipped that it can generate a control voltage with at least one jump point, particularly a square wave signal.

8. Moisture sensor (1) according to any one of claims 1 to 7, **characterised in that** the insulation layer (3) comprises a silicon dioxide layer and/or a silicon nitride layer.

9. Moisture sensor (1) according to any one of claims 1 to 8, **characterised in that** the signal source, the control electrode (10), the potential sensor, the insulation layer (3) and the evaluating device are integrated in a semiconductor chip.

10. Method (1) for measuring the moisture of a gaseous medium, wherein a moisture film having a layer thickness dependent on the relative moisture in the medium is produced on the solid body and wherein an electrical control voltage is applied to the moisture film at at least one feed point (11), wherein a measurement signal for an electrical potential, which is dependent on the layer thickness (6a, 6b) of the moisture film (5a, 5b) and the control voltage, is capacitively measured through an electrical insulation layer (3) at a point spaced from the at least one feed point (11),
- wherein the control voltage is changed over time and the speed at which the electrical potential changes as a reaction to a change of the control voltage is determined and/or
- wherein a potential displacement between the measured electrical potential and a reference potential is determined.

## Revendications

1. Détecteur d'humidité (1), qui présente à sa surface une zone de réception (4) pour un film d'humidité (5a, 5b), dont l'épaisseur de couche (6a, 6b) dépend de l'humidité relative dans l'environnement de la zone de réception (4), dans lequel le détecteur d'humidité (1) comporte une source de signal qui comprend des moyens pour produire une tension de commande, dans lequel la source de signal est reliée à au moins une électrode de commande (10) adjacente à au moins un point d'alimentation (11) sur la zone de réception (4) pour appliquer la tension de commande au film d'humidité (5a, 5b), dans lequel le détecteur d'humidité (1) présente au moins un détecteur de potentiel, qui présente en dessous de la zone de réception (4) au moins une zone de détecteur (9) espacée dudit au moins un point d'alimentation (11) et qui est électriquement isolée par rapport à la zone de réception (4) par une couche d'isolation (3) se trouvant entre cette zone et la zone de réception (4), de telle manière que, au moyen du détecteur de potentiel, un potentiel électrique dépendant de l'épaisseur de couche du film d'humidité (5a, 5b) et de la tension de commande puisse être détecté par voie capacitive, dans lequel un dispositif d'évaluation est relié à la sortie du signal de mesure du détecteur de potentiel pour déterminer l'humidité sur la base du signal de mesure présent à la sortie du signal de mesure,
- dans lequel la source de signal présente des moyens pour produire une tension de commande variable et le dispositif d'évaluation présente des moyens pour produire un signal dépendant de la vitesse avec laquelle le signal de mesure du détecteur de potentiel change en réaction à la variation de la tension de commande, et/ou
- dans lequel le dispositif d'évaluation présente des moyens pour produire un signal pour un décalage de potentiel entre le signal de mesure du détecteur de potentiel et un signal de référence ou un potentiel de référence.

2. Détecteur d'humidité (1) selon la revendication 1, **caractérisé en ce que** l'électrode de commande (10) présente au moins deux zones d'électrode reliées l'une à l'autre par au moins une piste conductrice et **en ce que** la zone de réception est disposée entre ces zones d'électrode.

3. Détecteur d'humidité (1) selon la revendication 1 ou 2, **caractérisé en ce que** l'électrode de commande (10) entoure de préférence sans interruption la zone de réception (4) et est réalisée en particulier en forme d'électrode annulaire.

4. Détecteur d'humidité (1) selon l'une quelconque des revendications 1 à 3, **caractérisé en ce que** le détecteur de potentiel est un transistor à effet de champ, en particulier un transistor à effet de champ ionosensible, qui présente un substrat semi-conducteur (2) d'un premier type de porteurs de charge, sur lequel un drain (7) et une source (8) d'un deuxième type de porteurs de charge sont disposés, et **en ce qu'**une zone de canal, qui forme la zone de détecteur (9), est formée entre le drain (7) et la source (8).

5. Détecteur d'humidité (1) selon l'une quelconque des revendications 1 à 4, **caractérisé en ce que** la zone de détecteur (9) est formée par une électrode de mesure de préférence plate, qui est reliée par une piste conductrice à la zone de canal d'un transistor à effet de champ et/ou à une entrée d'un amplificateur de mesure à haute impédance.

6. Détecteur d'humidité (1) selon l'une quelconque des revendications 1 à 5, **caractérisé en ce que** la distance libre entre deux zones d'électrode disposées de part et d'autre de la zone de réception ou la largeur libre de l'électrode annulaire est inférieure à 100 µm, en particulier inférieure à 10 µm et de préférence inférieure à 1 µm.

7. Détecteur d'humidité (1) selon l'une quelconque des revendications 1 à 6, **caractérisé en ce que** la source de signal est configurée de telle manière qu'elle puisse produire une tension de commande avec au moins un point de saut, en particulier un signal rectangulaire.

8. Détecteur d'humidité (1) selon l'une quelconque des revendications 1 à 7, **caractérisé en ce que** la couche d'isolation (3) comprend une couche de dioxyde de silicium et/ou une couche de nitrure de silicium.

9. Détecteur d'humidité (1) selon l'une quelconque des revendications 1 à 8, **caractérisé en ce que** la source de signal, l'électrode de commande (10), le détecteur de potentiel, la couche d'isolation (3) et le dispositif d'évaluation sont intégrés dans une puce à semi-conducteur.

10. Procédé (1) pour la mesure de l'humidité d'un milieu gazeux, dans lequel on produit sur un corps solide un film d'humidité, dont l'épaisseur de couche dépend de l'humidité relative dans le milieu, et dans lequel on applique en au moins un point d'alimentation (11) une tension électrique de commande au film d'humidité, dans lequel on mesure, en un point distant dudit au moins un point d'alimentation (11), un signal de mesure pour un potentiel électrique dépendant de l'épaisseur de couche (6a, 6b) du film d'humidité (5a, 5b) et de la tension de commande, par voie capacitive à travers une couche d'isolation électrique (3),
- dans lequel on fait varier dans le temps la tension de commande et on détermine la vitesse avec laquelle le potentiel électrique varie en réaction à une variation de la tension de commande, et/ou
- dans lequel on détermine un décalage de potentiel entre le potentiel électrique mesuré et un potentiel de référence.
